# EUROPEAN PATENT APPLICATION

(11) **EP 4 765 978 A1**
(43) Date of publication of application: **24.06.2026**
(21) Application number: 23949317.4
(22) Date of filing: 18.08.2023
(51) Int. Cl.: H04W 72/0453

(54) **COMMUNICATION METHOD, ACCESS POINT DEVICE, STATION DEVICE AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/113836
(87) International publication number: WO 2025/039123

(57) **Abstract**

Embodiments of the present disclosure relate to a communication method, an access point device, a station device, and a communication system. The communication method comprises: an access point device determines a first radio frame, wherein the first radio frame is used for triggering a station device to switch to a secondary channel for communication when a primary channel is busy, the first radio frame comprises first identification information, and the first identification information identifies bandwidth information of the secondary channel negotiated between the access point device and the station device; and the station device monitors and receives the first radio frame on the secondary channel, determines parameter information of the secondary channel on the basis of the first identification information in the first radio frame, and carries out communication in the secondary channel on the basis of the parameter information, so that the throughput of a communication system is improved, and the utilization of channel resources is maximized.

## Description

### TECHNICAL FIELD

The present disclosure relates to the field of communication technology, and particularly, to a communication method, an access point, a station and a communication system.

### BACKGROUND

Currently, research in Wi-Fi technology includes for example Ultra High Reliability (UHR), which is to improve reliability of Wireless Local Area Network (WLAN) connectivity, reduce latencies, increase manageability, increase throughput at different Signal to Noise Ratio (SNR) levels and reduce device level power consumption.

In the UHR, in order to fully utilize a channel resource and support a WLAN device to communicate on a secondary channel, the mechanism for communication on the secondary channel needs to be further improved to meet UHR transmission requirement.

### SUMMARY

Embodiments of the present disclosure provide a communication method, an access point, a station and a communication system so as to further improve the mechanism for a WLAN device to communicate on a secondary channel.

In an aspect, an embodiment of the present disclosure provides a communication method, including:
determining, by an access point, a first wireless frame, wherein the first wireless frame is configured to trigger a station to switch to a secondary channel for communication when a primary channel is busy, the first wireless frame includes first identifier information, and the first identifier information identifies bandwidth information of the secondary channel negotiated between the access point and the station; and
sending the first wireless frame on the secondary channel.

In another aspect, an embodiment of the present disclosure further provides a communication method, including:
receiving, by a station, a first wireless frame on a secondary channel, wherein the first wireless frame is configured to trigger the station to switch to the secondary channel for communication when a primary channel is busy, the first wireless frame includes first identifier information, and the first identifier information identifies bandwidth information of the secondary channel negotiated between an access point and the station.

In another aspect, an embodiment of the present disclosure further provides an access point, including:
a determining module, configured to determine a first wireless frame, wherein the first wireless frame is configured to trigger a station to switch to a secondary channel for communication when a primary channel is busy, the first wireless frame includes first identifier information, and the first identifier information identifies bandwidth information of the secondary channel negotiated between the access point and the station; and
a sending module, configured to send the first wireless frame on the secondary channel.

In another aspect, an embodiment of the present disclosure further provides a station, including:
a first receiving module, configured to receive a first wireless frame on a secondary channel, wherein the first wireless frame is configured to trigger the station to switch to the secondary channel for communication when a primary channel is busy, the first wireless frame includes first identifier information, and the first identifier information identifies bandwidth information of the secondary channel negotiated between the access point and the station.

In another aspect, an embodiment of the present disclosure further provides a communication device including an access point, and the access point includes:
one or more processors,
wherein the access point is configured to perform and implement the communication method according to the embodiments of the present disclosure.

In another aspect, an embodiment of the present disclosure further provides a communication device including a station, and the station includes:
one or more processors,
wherein the station is configured to perform and implement the communication method according to the embodiments of the present disclosure.

The embodiments of the present disclosure further provide a communication system including an access point and a station, wherein the access point is configured to implement the communication method according to the embodiments of the present disclosure, and the station is configured to implement the communication method according to the embodiments of the present disclosure.

The embodiments of the present disclosure further provide a storage medium having instructions stored thereon that, when being executed on a communication device, cause the communication device to perform the communication method according to the embodiments of the present disclosure or the communication method according to the embodiments of the present disclosure.

In the embodiments of the present disclosure, the access point determines the first wireless frame, in which the first wireless frame is configured to trigger the station to switch to the secondary channel for communication when the primary channel is busy, the first wireless frame includes the first identifier information, and the first identifier information identifies bandwidth information of the secondary channel negotiated between the access point and the station; and the station monitors and receives the first wireless frame on the secondary channel, determines parameter information of the secondary channel based on the first identifier information in the first wireless frame, and communicates on the secondary channel according to the parameter information, which enhances throughput of the communication system and maximizes channel resource utilization.

Additional aspects and advantages of the embodiments of the present disclosure will be partially provided in the following description, and will partially become apparent from the following description or be learned through practice of the present disclosure.

### BRIEF DESCRIPTION OF THE DRAWINGS

To more clearly illustrate the technical solutions in the embodiments of the present disclosure, the accompanying drawings for describing the embodiments are introduced below. The following drawings merely represent some embodiments of the present disclosure and do not impose specific limitations on the protection scope of the present disclosure.
FIG. 1 is a schematic diagram of an architecture of a communication system according to an embodiment of the present disclosure;
FIG. 2 is an exemplary interaction diagram of a method according to an embodiment of the present disclosure;
FIG. 3 is a flowchart diagram of a communication method according to an embodiment of the present disclosure;
FIG. 4 is another flowchart diagram of a communication method according to an embodiment of the present disclosure;
FIG. 5 is a schematic structural diagram of an access point according to an embodiment of the present disclosure;
FIG. 6 is a schematic structural diagram of a station according to an embodiment of the present disclosure;
FIG. 7 is a schematic structural diagram of a terminal according to an embodiment of the present disclosure;
FIG. 8 is a schematic structural diagram of a chip according to an embodiment of the present disclosure.

### DETAILED DESCRIPTION

Embodiments of the present disclosure provide a communication method, an access point, a station, and a communication system.

In a first aspect, an embodiment of the present disclosure provides a communication method, including:
determining, by an access point, a first wireless frame, wherein the first wireless frame is configured to trigger a station to switch to a secondary channel for communication when a primary channel is busy, the first wireless frame includes first identifier information, and the first identifier information identifies bandwidth information of the secondary channel negotiated between the access point and the station; and
sending the first wireless frame on the secondary channel.

In the above embodiment, the access point determines the first wireless frame, so that the station monitors and receives the first wireless frame on the secondary channel, determines parameter information of the secondary channel based on the first identifier information in the first wireless frame, and communicates on the secondary channel according to the parameter information, which enhances throughput of the communication system and maximizes channel resource utilization.

In conjunction with some embodiments of the first aspect and in some embodiments, the first identifier information is carried in a common info field of the first wireless frame, and the bandwidth information includes one or more bandwidth values.

In the above embodiments, by negotiating the bandwidth information of the secondary channel, the mechanism for a WLAN device to communicate on the secondary channel may be further improved to enhance throughput of the communication system

In conjunction with some embodiments of the first aspect and in some embodiments, the first wireless frame includes second identifier information, and the second identifier information identifies that a type of the first wireless frame is an establishment frame configured to trigger a switch to the secondary channel for communication.

In the above embodiments, identifying the type of the first wireless frame may help to trigger the station to switch to the secondary channel for communication.

In conjunction with some embodiments of the first aspect and in some embodiments, the second identifier information is carried in a user info field of the first wireless frame, and the user info field further includes parameter information of the secondary channel.

In the above embodiments, by identifying the parameter information of the secondary channel via the user info field, the mechanism for a WLAN device to communicate on the secondary channel may be further improved.

In conjunction with some embodiments of the first aspect and in some embodiments, the parameter information includes at least one of:
channel identifier information, spatial stream information, association identifier (AID) information of the station, or modulation and coding scheme (MCS) information.

In the above embodiments, by providing more parameter information, the mechanism for a WLAN device to communicate on the secondary channel may be further improved.

In conjunction with some embodiments of the first aspect and in some embodiments, the first wireless frame includes a multi-user request to send (MU-RTS) frame or a buffer status report poll (BSRP) frame.

In the above embodiments, the first identifier information is carried via the MU-RTS frame or BSRP frame.

In conjunction with some embodiments of the first aspect and in some embodiments, the method further includes:
receiving a second wireless frame sent by the station,
wherein the second wireless frame identifies that the station communicates on the secondary channel, and the second wireless frame includes a clear to send (CTS) frame and/or a quality of service (QoS) null frame, and the QoS null frame carries a BSR field.

In the above embodiments, by identifying via the second wireless frame that the station will communicate on the secondary channel, the mechanism for a WLAN device to communicate on the secondary channel may be further improved.

In conjunction with some embodiments of the first aspect and in some embodiments, the method further includes:
receiving a third wireless frame sent by the station,
wherein the third wireless frame identifies that the station has completed the communication on the secondary channel, and the third wireless frame includes a power saving (PS) field, the station and the access point pre-negotiate a PS mode, and the PS field identifies that the station enters the PS mode after switching to the primary channel.

In the above embodiments, the PS mode is negotiated via the third wireless frame.

In conjunction with some embodiments of the first aspect and in some embodiments, the method further includes:
receiving, on the primary channel, a data frame sent by the station via an enhanced distributed channel access (EDCA) mechanism, and/or a PS mode acknowledgement message frame sent by the station, wherein a duration during which the station communicates on the secondary channel exceeds a duration set by a network allocation vector (NAV) of the primary channel.

In the above embodiments, the data frame sent via the EDCA mechanism or the PS mode acknowledgement message frame identifies that the station 101 continues to send the data frame on the primary channel, which may further improve the mechanism for a WLAN device to communicate on the secondary channel, thereby enhancing throughput of the communication system.

In a second aspect, an embodiment of the present disclosure provides a communication method, including:
receiving, by a station, a first wireless frame on a secondary channel, wherein the first wireless frame is configured to trigger the station to switch to the secondary channel for communication when a primary channel is busy, the first wireless frame includes first identifier information, and the first identifier information identifies bandwidth information of the secondary channel negotiated between an access point and the station.

In conjunction with some embodiments of the second aspect and in some embodiments,
the first identifier information is carried in a common info field of the first wireless frame, and the bandwidth information includes one or more bandwidth values.

In conjunction with some embodiments of the second aspect and in some embodiments,
the first wireless frame includes second identifier information, and the second identifier information identifies that a type of the first wireless frame is an establishment frame configured to trigger a switch to the secondary channel for communication.

In conjunction with some embodiments of the second aspect and in some embodiments, the second identifier information is carried in a user info field of the first wireless frame, and the user info field further includes parameter information of the secondary channel.

In conjunction with some embodiments of the second aspect and in some embodiments, the parameter information includes at least one of:
channel identifier information, spatial stream information, AID information of the station, or MCS information.

In conjunction with some embodiments of the second aspect and in some embodiments, the first wireless frame includes an MU-RTS frame or a BSRP frame.

In conjunction with some embodiments of the second aspect and in some embodiments, the method further includes:
sending a second wireless frame to the access point,
wherein the second wireless frame identifies that the station communicates on the secondary channel, and the second wireless frame includes a CTS frame and/or a QoS null frame, and the QoS null frame carries a BSR field.

In conjunction with some embodiments of the second aspect and in some embodiments, the method further includes:
sending a third wireless frame to the access point,
wherein the third wireless frame identifies that the station has completed the communication on the secondary channel, and the third wireless frame includes a PS field, the station and the access point pre-negotiate a PS mode, and the PS field identifies that the station enters the PS mode after switching to the primary channel.

In conjunction with some embodiments of the second aspect and in some embodiments, the method further includes:
sending, on the primary channel and via an EDCA mechanism, a data frame to the access point, and/or sending, on the primary channel, a PS mode acknowledgement message frame to the access point, wherein a duration during which the station communicates on the secondary channel exceeds a duration set by a NAV of the primary channel.

In a third aspect, an embodiment of the present disclosure provides an access point including at least one of a determining module or a sending module, and configured to perform an optional implementation of the first aspect.

In a fourth aspect, an embodiment of the present disclosure provides a station including a first receiving module, and configured to perform an optional implementation of the second aspect.

In a fifth aspect, an embodiment of the present disclosure provides an access point, including:
one or more processors,
wherein the access point is configured to perform an optional implementation of the first aspect.

In a sixth aspect, an embodiment of the present disclosure provides a station, including:
one or more processors,
wherein the station is configured to perform an optional implementation of the second aspect.

In a seventh aspect, an embodiment of the present disclosure provides a communication system including an access point and a station, the access point is configured to perform an optional implementation according to the first aspect, and the station is configured to perform an optional implementation according to the second aspect.

In an eighth aspect, an embodiment of the present disclosure provides a storage medium having instructions stored thereon that, when being executed on a communication device, cause the communication device to perform an optional implementation according to the first or second aspect.

In a ninth aspect, an embodiment of the present disclosure provides a program product that, when being executed by a communication device, causes the communication device to perform the method according to an optional implementation of the first or second aspect.

In a tenth aspect, an embodiment of the present disclosure provides a computer program that, when being executed by a computer, causes the computer to perform the method according to an optional implementation of the first or second aspect.

In an eleventh aspect, an embodiment of the present disclosure provides a chip or chip system. The chip or chip system includes a processing circuit configured to perform the method according to an optional implementation of the first or second aspect.

It can be understood that the above access point, station, communication system, storage medium, program product, computer program, chip, or chip system are all employed to execute the method provided by the embodiments of the present disclosure. Consequently, the beneficial effects achieved thereby may refer to the beneficial effects in the corresponding method, which are not repeated herein.

The embodiments of the present disclosure propose a communication method, an access point, a station, and a communication system. In some embodiments, the terms such as communication method, signal sending method, and wireless frame sending method may be used interchangeably, and the terms such as information processing system and communication system may be used interchangeably.

The embodiments of the present disclosure are not exhaustive but merely illustrate some embodiments, which do not constitute specific limitations on the protection scope of the present disclosure. If there is no contradiction, each step within an embodiment may be implemented as an independent embodiment, and various steps therein may be arbitrarily combined. For example, a solution in an embodiment with some steps removed may be implemented as an independent embodiment, and steps in an embodiment may be arbitrarily exchanged in sequence. Furthermore, optional implementations in an embodiment may be arbitrarily combined. Moreover, various embodiments may be arbitrarily combined. For example, part or all steps from different embodiments may be arbitrarily combined, and an embodiment may be arbitrarily combined with an optional implementation from another embodiment.

In the embodiments of the present disclosure, unless otherwise specified or logically conflicting, the terms and/or descriptions remain consistent across the embodiments and may be cross-referenced. Technical features from different embodiments may be combined to form a new embodiment based on inherent logical relationships thereof.

The term employed in the embodiments of the present disclosure serves solely to describe specific embodiments and shall not be construed as limiting the scope of the present disclosure.

In the embodiments of the present disclosure, "a plurality of" denotes two or more.

In some embodiments, terms such as "at least one of", "one or more", "a plurality of", and "multiple" may be used interchangeably.

In some embodiments, depending on the content, the expressions such as "at least one of A or B", "A and/or B", "A in a case, B in another case", or "in response to a case A, in response to another case B" may include the following technical solutions: in some embodiments, A (A is executed independently of B); in some embodiments, B (B is executed independently of A); in some embodiments, selection from A and B to be executed (A and B are selectively executed); and in some embodiments, A and B (both A and B are executed). When there are more elements such as A, B, C, etc., similar principle is applied.

In some embodiments, depending on the context, the expression such as "A or B" may include the following technical solutions: in some embodiments, A (A is executed independently of B); in some embodiments, B (B is executed independently of A); and in some embodiments, selection from A and B to be executed (A and B are selectively executed). When there are more elements such as A, B, C, etc., similar principle is applied.

In the embodiments of the present disclosure, the prefixes such as "first", "second" serve solely to distinguish different described objects, and do not impose any restrictions on the position, sequence, priority, quantity, or content of a described object. The statements regarding the described objects refer to the description in the context of claims or embodiments, and the prefixes used should not be construed as imposing additional limitations. For example, when the described object is "field", the ordinal numbers preceding "field" in "first field" and "second field" do not restrict the positional relationship or sequence between the fields, and "first" and "second" do not limit whether the fields they define reside within the same message, nor do they limit the chronological order between "first field" and "second field". For another example, when the described object is "level", the ordinal numbers preceding "level" in "first level" and "second level" do not restrict the priority between levels. For further another example, the quantity of the described objects is not limited by the ordinal number, and it may be one or more. Taking "first device" as an example, the quantity of "devices" may be one or more. Furthermore, the objects modified by different prefixes may be the same or different. For example, when the described object is "device", "first device" and "second device" may be the same device or different devices, and the types thereof may be the same or different. For another example, when the described object is "information", "first information" and "second information" may be the same information or different information, and the contents thereof may be the same or different.

In some embodiments, the expressions such as "including A", "containing A", "for indicating A", and "carrying A" may be interpreted as either directly carrying A or indirectly indicating A.

In some embodiments, the terms such as "in response to...", "in response to determining...", "in the case of...", "at the time of...", "when...", and "if..." may be used interchangeably.

In some embodiments, the terms such as "greater than", "greater than or equal to", "not less than", "more than", "more than or equal to", "not fewer than", "higher than", "higher than or equal to", "not lower than" and "above" may be used interchangeably, and the terms such as "less than", "less than or equal to", "not greater than", "fewer than", "fewer than or equal to", "not more than", "lower than, "lower than or equal to", "not higher than" and "below" may be used interchangeably.

In some embodiments, devices and apparatus may be interpreted as either physical or virtual entities, and the names thereof are not limited to that recited in the embodiments. In some instances, they may also be understood as "equipment", "device", "circuit", "network element", "node", "function", "unit", "section", "system", "network", "chip", "chip system", "entity", "body" or the like.

In some embodiments, the acquisition of data, information, etc., may comply with the laws and regulations of the local country.

In some embodiments, data, information, etc., may be acquired after the agreement of user.

Furthermore, each element, row, or column in a table in an embodiment of the present disclosure may be implemented as an independent embodiment, and a combination of any element, any row, or any column may also be implemented as an independent embodiment.

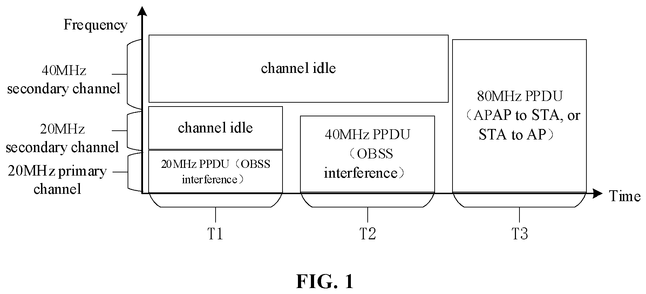

FIG. 1 is a schematic diagram of a communication method according to an embodiment of the present disclosure.

As shown in FIG. 1, in a WLAN, channels typically include a primary channel and a secondary channel (or a non-primary channel). An example of the primary channel is 20 MHz primary channel shown in FIG. 1. The secondary channel may include one or more sub-channels, such as 20 MHz secondary channel and 40 MHz secondary channel shown in FIG. 1.

During the process of channel contention on the channel, if the primary channel is in an OBSS busy state (OBSS interference), as shown in T1 and T2 time periods in the figure, for example, the primary channel is occupied by an other device in the same OBSS as the WLAN, and the other device sends physical protocol data units (PPDUs) on the primary channel, the primary channel is in the OBSS busy state. When the primary channel is in the OBSS busy state, in order to fully utilize channel resources, the communication may switch to the secondary channel to enhance system throughput and maximize channel resource utilization. For example, the communication may switch to the 20MHz secondary channel during the T1 time field, or to the 40MHz secondary channel during the T2 time field.

If the primary channel is in an idle state, as shown in the T3 time period in the figure, the AP and STA may transmit PPDUs to each other.

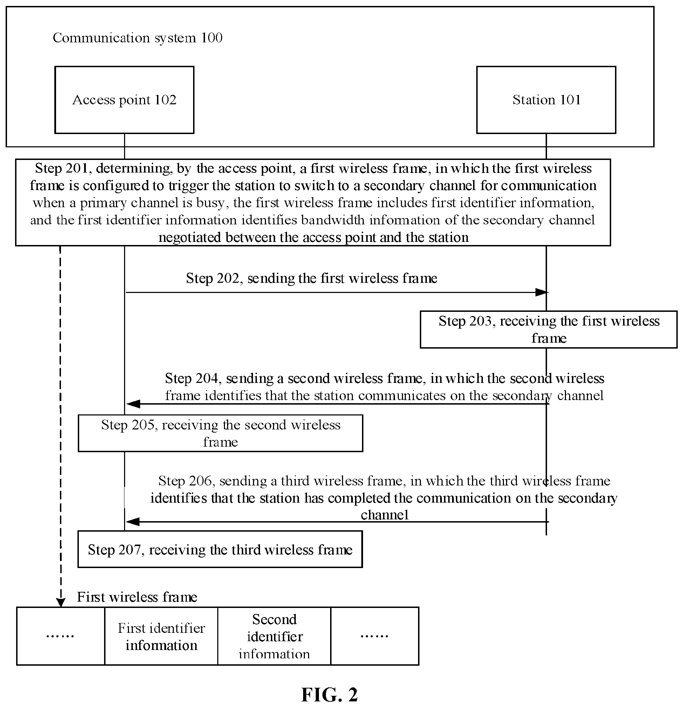

FIG. 2 is a schematic architectural diagram of a communication system according to an embodiment of the present disclosure.

As shown in FIG. 2, the communication system 100 includes a station (STA) 101 and an access point (AP) 102.

In some embodiments, the station 101may include, for example, a wireless communication chip, a wireless sensor, or a wireless communication terminal which supports WiFi function. Optionally, the wireless communication terminal may include, for example, at least one of a mobile phone, a wearable device, an Internet of Things (IoT) device supporting WiFi communication function, a vehicle having WiFi communication function, a smart vehicle, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal devices in smart grid, a wireless terminal device in transportation safety, a wireless terminal device in smart city, or a wireless terminal device in smart home or the like, however which is not limited thereto.

Specifically, the station 101 may be a terminal device or network device having a wireless fidelity (WiFi) chip. Optionally, the station 101 may support a plurality of WLAN standards such as 802.11ax, 802.11be, 802.11ac, 802.11n, 802.11g, 802.11b, 802.11a, 802.11bf, 802.11bn, etc., and may also support next-generation 802.11 protocols, which however is not limited thereto.

In some embodiments, the access point 102 may be an access point for a mobile terminal into a wired network. The AP corresponds to a bridge connecting wired and wireless networks, and the main function thereof is to connect various wireless network clients and then connect the wireless network to the Ethernet. Specifically, the AP may be a terminal device or network device having a Wi-Fi chip. Optionally, the AP may support a plurality of WLAN standards such as 802.11ax, 802.11be, 802.11ac, 802.11n, 802.11g, 802.11b, 802.11a, 802.11bf, 802.11bn, etc., and may also support next-generation 802.11 protocols, which however is not limited thereto.

Optionally, in the embodiments of the present disclosure, the AP and STA may be devices supporting multi-link. For example, they may be represented respectively as an access point multi-link device (AP MLD) and a non-access point multi-link device (Non-AP MLD). The AP MLD may represent an access point supporting multi-link communication function, and the Non-AP MLD may represent a station supporting multi-link communication function.

It shall be understood that the communication system described in the embodiments of the present disclosure are intended to illustrate the technical solutions of the embodiments of the present disclosure more clearly and do not constitute limitations on the technical solutions provided by the embodiments of the present disclosure. A person skilled in the art may appreciate that, with the evolution of system architecture and the emergence of new service scenario, the technical solutions provided by the embodiments of the present disclosure are equally applicable to similar technical problems.

The following embodiments of the present disclosure may be applied to the communication system 100 shown in FIG. 2, or part of entities thereof, however the present disclosure is not limited thereto. The entities in FIG. 2 are illustrative. The communication system may include all or part of the entities shown in FIG. 2, or may include other entities than that shown in FIG. 2. The number and configuration of entities are arbitrary. The entities may be physical or virtual. The connections between entities are illustrative. The entities may be connected or unconnected, and the connection may be in any manner - they may be connected directly or indirectly, via wired or wireless means.

The embodiments of the present disclosure may be applied to a Wireless Local Area Network (WLAN), such as a local area network employing the 802.11 protocols. Within the WLAN, a Basic Service Set (BSS) is a fundamental component thereof. A BSS network includes stations having an association within a specific coverage area. A form of such association is that stations communicate with each other directly within a self-organized network, which is referred to as an Independent Basic Service Set (IBSS). Another more common form is that a single central station in the BSS network is dedicated to managing the BSS, which is referred to as an access point (AP), and other STAs in the network are associated to the single central station. The other stations than the central station in the BSS network are referred to as terminals, also known as non-AP STAs, and the terminal and non-AP STA are collectively referred to as STAs. When describing the STA, it may not distinguish between the AP and the non-AP STA. Within the same BSS network, due to factors such as distance and transmission power, an STA may not detect another STA located far therefrom, and the two STAs become hidden nodes to each other.

As shown in FIG. 2, the above method includes the following steps.

In step 201, the access point 102 determines a first wireless frame, in which the first wireless frame is configured to trigger a station to switch to a secondary channel for communication when a primary channel is busy, the first wireless frame includes first identifier information, and the first identifier information identifies bandwidth information of the secondary channel negotiated between the access point and the station.

In the WLAN, channels typically include a primary channel and a secondary channel (or non-primary channel). The secondary channel may include one or more sub-channels. For example, by partitioning using 20MHz as a fundamental bandwidth unit, when the channel bandwidth is 20MHz, only one primary channel of 20MHz bandwidth is included; and when the channel bandwidth exceeds 20MHz, one channel of 20MHz bandwidth is included as the primary channel, one or more other channels of 20MHz bandwidth are included as secondary channels. The 20MHz primary channel is the common channel of operation for stations that are members of the basic service set (BBS). The station within the BSS may engage in channel contention on the 20MHz primary channel to acquire channel resources.

During the process of channel contention on the channel, if the primary channel is in an OBSS busy state, for example, the primary channel is occupied by an other device in the same OBSS as the access point 102, and the other device sends physical protocol data units (PPDUs) on the primary channel, the primary channel is in the OBSS busy state. When the primary channel is in the OBSS busy state, in order to fully utilize channel resources, the communication with the station 101 may switch to the secondary channel, and the station 101 is scheduled onto the secondary channel, so that sending data to or receiving data from the station 101 may be implemented to enhance communication system throughput and maximize channel resource utilization.

In an embodiment of the present disclosure, in order to switch to the secondary channel for communication when the primary channel is busy, the access point 102 determines a first wireless frame, and the first wireless frame is configured to trigger the station to switch to the secondary channel for communication when the primary channel is busy. Optionally, the first wireless frame may be a trigger frame, such as a Multi-User Request to Send (MU-RTS) or a Buffer Status Report Poll (BSRP) frame.

The first wireless frame includes the first identifier information, and the first identifier information identifies the bandwidth information of the secondary channel negotiated between the access point and the station. The bandwidth information represents a communication bandwidth value of the secondary channel negotiated between the access point 102 and the station 101, such as uplink bandwidth information (UL Bandwidth, UL BW) or downlink bandwidth information (DL Bandwidth, DL BW). Optionally, taking UL BW as an example, two bits may be used in the first wireless frame to identify the UL BW value, such as '00' for 20MHz, '01' for 40MHz, "10" for 80MHz, and '11' for 160MHz.

Taking the first wireless frame as the MU-RTS frame or BSRP frame, the first identifier information may be carried in the common info field of the first wireless frame.

In step 202, the access point 102 sends the first wireless frame on the secondary channel.

Herein, the access point 102 sends the first wireless frame on the secondary channel, so that the WLAN device can communicate on the secondary channel when the primary channel is busy. For example, when non-periodic data transmission occurs between the access point 102 and the station 101, or when the access point 102 has downlink data to be sent to the station 101, the WLAN device may switch to the secondary channel to send the MU-RTS frame or BSRP frame upon detecting the primary channel as busy. The station 101 monitors and receives the first wireless frame on the secondary channel, determines parameter information of the secondary channel based on the first identifier information in the first wireless frame, and communicates on the secondary channel according to the parameter information, which enhances throughput of the communication system and maximizes channel resource utilization.

In step 203, the station 101 receives the first wireless frame on the secondary channel.

Optionally, upon monitoring and receiving the first wireless frame on the secondary channel, the station 101 may respond to the access point 102 with a clear to send (CTS) frame. This enables the access point 102 to confirm based on the CTS frame that the secondary channel is in an idle state, so that data may be sent, thereby implementing communication on the secondary channel.

In some embodiments, the first identifier information is carried in a common info field of the first wireless frame, and the bandwidth information includes one or more bandwidth values.

Herein, the first identifier information may be carried in the common info field of the first wireless frame, and the bandwidth information represents a communication bandwidth value of the secondary channel negotiated between the access point 102 and the station 101, such as uplink bandwidth information (UL Bandwidth, UL BW) or downlink bandwidth information (DL Bandwidth, DL BW). The bandwidth information includes one or more bandwidth values. Taking UL BW as an example, two bits in the common info field may be used to identify the UL BW value, such as '00' for 20MHz, '01' for 40MHz, '10' for 80MHz, and '11' for 160MHz. By negotiating bandwidth information of the secondary channel, the mechanism for the WLAN device to communicate on the secondary channel is further improved, thereby enhancing throughput of the communication system.

In some embodiments, the first wireless frame includes second identifier information, and the second identifier information identifies that a type of the first wireless frame is an establishment frame configured to trigger a switch to the secondary channel for communication. For example, the first wireless frame may be a MU-RTS frame or a BSRP frame to trigger the switch to the secondary channel for communication.

In some embodiments, the second identifier information is carried in a user info field of the first wireless frame.

Herein, the second identifier information is carried in the user info field of the first wireless frame, and one bit in the user info field is used to identify the frame type of the first wireless frame.

The user info field further includes parameter information of the secondary channel, so that by identifying the parameter information of the secondary channel, the mechanism for a WLAN device to communicate on the secondary channel may be further improved.

In some embodiments, the parameter information includes at least one of:

channel identifier (ID) information, spatial stream information, association identifier (AID) information of the station, or modulation and coding scheme (MCS) information.

Herein, the channel ID may be determined during an initial association process between the access point 102 and the station 101; the spatial stream information may be identified in the form of SS allocation information, and may be parameter information such as number of spatial streams (NSS); the AID information may be assigned by the access point 102 to the station 101 during the initial association process; and the MCS information includes an MCS mode, such as modulation mode, transmission power, etc. Typically, the communication environment between the primary channel and the secondary channel exhibits minimal variation, and the MCS mode of the secondary channel may be identical to that of the primary channel.

In step 204, the station 101 sends a second wireless frame, in which the second wireless frame identifies that the station communicates on the secondary channel, the second wireless frame includes a CTS frame and/or a QoS null frame, and the QoS null frame carries a BSR field.

Herein, the station 101 monitors and receives the first wireless frame on the secondary channel, and may respond to the access point 102 with the second wireless frame. The second wireless frame identifies that the station will communicate on the secondary channel;

Optionally, the second wireless frame may include a CTS frame and/or a Quality of Service-null (QoS null) frame, the QoS null frame carries a buffer status report (BSR) field, and the BSR field identifies buffer status information of the station 101.

In step 205, the access point 102 receives the second wireless frame sent by the station 101, in which the second wireless frame identifies that the station communicates on the secondary channel.

Herein, the second wireless frame includes a CTS frame and/or a QoS null frame, and the QoS null frame carries a BSR field to identify that the station 101 communicates on the secondary channel.

In step 206, the station 101 sends a third wireless frame, in which the third wireless frame identifies that the station has completed the communication on the secondary channel.

Herein, the third wireless frame includes a PS field, the station and the access point pre-negotiate a power saving (PS) mode, and the PS field identifies that the station enters the PS mode after switching to the primary channel.

If the station and the access point have pre-negotiated the PS mode on the primary channel, the station 101 switches back to the primary channel and enters the PS mode after completing the communication on the secondary channel.

Optionally, the third wireless frame may be an ACK frame, and the PS field in the MAC frame header of the ACK frame may be set to '1' to identify entry into PS mode on the primary channel.

In step 207, the access point 102 receives the third wireless frame sent by the station, in which the third wireless frame identifies that the station has completed the communication on the secondary channel.

Herein the third wireless frame includes a PS field, the station and the access point pre-negotiate a PS mode, and the PS field identifies that the station enters the PS mode after switching to the primary channel.

After receiving the third wireless frame sent by the station, the access point 102 determines that the station 101 has completed the communication on the primary channel and will enter the PS mode after switching back to the primary channel.

Optionally, after receiving the third wireless frame, the access point 102 may send an acknowledgement frame to the station 101 to respond to the third wireless frame.

In some embodiments, the method further includes:
the access point 102 receiving, on the primary channel, a data frame sent by the station via an enhanced distributed channel access (EDCA) mechanism, and/or a PS mode acknowledgement message frame sent by the station, in which a duration during which the station communicates on the secondary channel exceeds a duration set by a NAV of the primary channel.

Generally, the duration of communication between the access point 102 and the station 101 on the secondary channel does not exceed the duration set by the network allocation vector (NAV) of the primary channel. If the duration of communication on the secondary channel exceeds the duration set by the NAV on the primary channel sensed, the station 101 may only send data frames within the duration set by the NAV and may switch to the primary channel to continue communication, for example, by re-accessing the channel via the EDCA mechanism to continue sending data frames. Optionally, the station 101 also completes the PS acknowledgement via a PS mode acknowledgement message frame on the primary channel, for example, the PS mode acknowledgement message frame identifies that the station 101, after switching to the primary channel for communication, does not enter the PS mode and remains in the awake state.

The access point 102 receives, on the primary channel, the data frame sent by the station 101 via the EDCA mechanism, which identifies that the station 101 continues to send the data frame on the primary channel. The access point 102 receives, on the primary channel, the PS mode acknowledgement message frame sent by the station 101, which identifies that the station 101 does not enter the PS mode after switching to the primary channel for communication.

In some embodiments, the name of for example information is not limited to that recited in the embodiments, and the terms such as "information", "message", "signal", "signaling", "report", "configuration", "indication", "instruction", "command", "channel", "parameter", "domain", "field", "symbol", "codepoint", "bit", "data", "program", and "chip" may be used interchangeably.

In some embodiments, the terms such as "moment", "time point", "time", and "time position" may be used interchangeably, and the terms "duration", "period", "time window", "window", and "time" may also be used interchangeably.

In some embodiments, the terms such as wireless access scheme and waveform may be used interchangeably.

In some embodiments, the terms such as "certain", "preseted", "predetermined", "set", "indicated", "a certain", "any", "first", etc. may be used interchangeably, the terms such as "specific A", "preset A", "predetermined A", "set A", "indicated A", "a certain A", "any A", "first A" may be interpreted as A predefined in a protocol, etc., or as A obtained through setting, configuring, or indicating, etc., or as specific A, a certain A, any A, or first A, etc., however the present disclosure is not limited thereto.

In some embodiments, the determination or judgement may be performed by using a value (0 or 1) represented by one bit, by using a Boolean value represented by true or false, or by comparing a numerical value (e.g., to a predetermined value), however the present disclosure is not limited thereto.

In some embodiments, "not expecting to receive" may be interpreted as not receiving on time-domain resources and/or frequency-domain resources, or as not performing subsequent processing on data, etc., after receiving such data, etc.; and "not expecting to send" may be interpreted as not sending, or as sending but not expecting the recipient to respond to the sent content.

The communication method involved in the embodiments of of the present disclosure may include at least one of the above steps and the embodiments. For example, step 201 may be implemented as an independent embodiment, step 202 may be implemented as an independent embodiment, step 204 may be implemented as an independent embodiment, step 205 may be implemented as an independent embodiment, and step 206 may be implemented as an independent embodiment; and the combination of step 201 and step 202 may be implemented as an independent embodiment, and the combination of step 204 and step 205 may be implemented as an independent embodiment, however the present disclosure is not limited thereto.

In some embodiments, reference may be made to other optional implementations described before or after the description corresponding to FIG. 2.

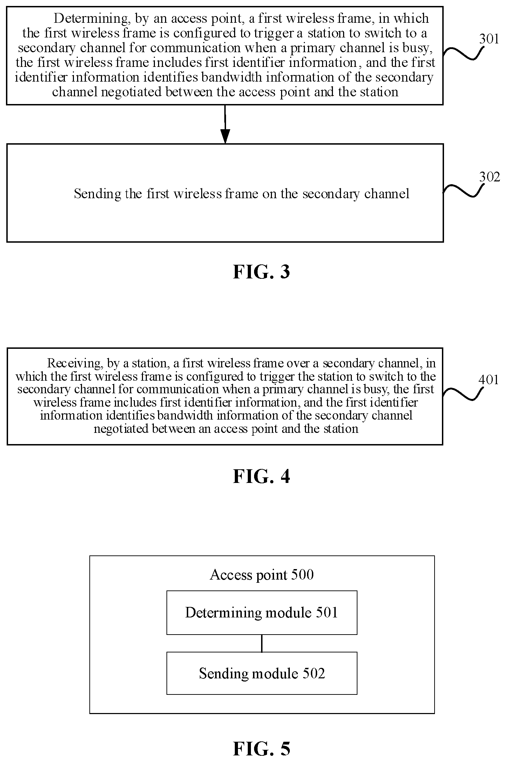

FIG. 3 is a flowchart diagram of a communication method according to an embodiment of the present disclosure.

As shown in FIG. 3, the method may be applied to the access point 102, and includes:
step 301, determining, by an access point, a first wireless frame, wherein the first wireless frame is configured to trigger a station to switch to a secondary channel for communication when a primary channel is busy, the first wireless frame includes first identifier information, and the first identifier information identifies bandwidth information of the secondary channel negotiated between the access point and the station; and
step 302, sending the first wireless frame on the secondary channel.

Optionally, in an embodiment of the present disclosure, the first identifier information is carried in a common info field of the first wireless frame, and the bandwidth information includes one or more bandwidth values.

Optionally, in an embodiment of the present disclosure, the first wireless frame includes second identifier information, and the second identifier information identifies that a type of the first wireless frame is an establishment frame configured to trigger a switch to the secondary channel for communication.

Optionally, in an embodiment of the present disclosure, the second identifier information is carried in a user info field of the first wireless frame, and the user info field further includes parameter information of the secondary channel.

Optionally, in an embodiment of the present disclosure, the parameter information includes at least one of:
channel identifier information, spatial stream information, association identifier (AID) information of the station, or MCS information.

Optionally, in an embodiment of the present disclosure, the first wireless frame includes a multi-user request to send (MU-RTS) frame or a buffer status report poll (BSRP) frame.

Optionally, in an embodiment of the present disclosure, the method further includes:
step 305, receiving a second wireless frame sent by the station,
wherein the second wireless frame identifies that the station communicates on the secondary channel, and the second wireless frame includes a clear to send (CTS) frame and/or a quality of service (QoS) null frame, and the QoS null frame carries a buffer status report (BSR) field.

Optionally, in an embodiment of the present disclosure, the method further includes:
step 307, receiving a third wireless frame sent by the station,
wherein the third wireless frame identifies that the station has completed the communication on the secondary channel, and the third wireless frame includes a power saving (PS) field, the station and the access point pre-negotiate a PS mode, and the PS field identifies that the station enters the PS mode after switching to the primary channel.

Optionally, in an embodiment of the present disclosure, the method further includes:
receiving, on the primary channel, a data frame sent by the station via an enhanced distributed channel access (EDCA) mechanism, and/or a PS mode acknowledgement message frame sent by the station, wherein a duration during which the station communicates on the secondary channel exceeds a duration set by a network allocation vector (NAV) of the primary channel.

The communication method involved in the embodiments of the present disclosure may include at least one of the above steps and the embodiments. For example, step 301 may be implemented as an independent embodiment, step 302 may be implemented as an independent embodiment, step 305 may be implemented as an independent embodiment, and step 307 may be implemented as an independent embodiment; and the combination of step 301 and step 302 may be implemented as an independent embodiment, however the present disclosure is not limited thereto.

In some embodiments, reference may be made to other optional implementations described before or after the description corresponding to FIG. 3.

FIG. 4 is another flowchart diagram of a communication method according to an embodiment of the present disclosure.

As shown in FIG. 4, the method is applied to the station 101, and includes:
step 401, receiving, by the station, a first wireless frame on a secondary channel, wherein the first wireless frame is configured to trigger the station to switch to the secondary channel for communication when a primary channel is busy, the first wireless frame includes first identifier information, and the first identifier information identifies bandwidth information of the secondary channel negotiated between an access point and the station.

Optionally, in an embodiment of the present disclosure, the first identifier information is carried in a common info field of the first wireless frame, and the bandwidth information includes one or more bandwidth values.

Optionally, in an embodiment of the present disclosure, the first wireless frame includes second identifier information, and the second identifier information identifies that a type of the first wireless frame is an establishment frame configured to trigger a switch to the secondary channel for communication.

Optionally, in an embodiment of the present disclosure, the second identifier information is carried in a user info field of the first wireless frame, and the user info field further includes parameter information of the secondary channel.

Optionally, in an embodiment of the present disclosure, the parameter information includes at least one of:
channel identifier information, spatial stream information, AID information of the station, or MCS information.

Optionally, in an embodiment of the present disclosure, the first wireless frame includes an MU-RTS frame or a BSRP frame.

Optionally, in an embodiment of the present disclosure, the method further includes:
step 404, sending a second wireless frame to the access point,
wherein the second wireless frame identifies that the station communicates on the secondary channel, and the second wireless frame includes a CTS frame and/or a QoS null frame, and the QoS null frame carries a BSR field.

Optionally, in an embodiment of the present disclosure, the method further includes:
step 406, sending a third wireless frame to the access point,
wherein the third wireless frame identifies that the station has completed the communication on the secondary channel, and the third wireless frame includes a PS field, the station and the access point pre-negotiate a PS mode, and the PS field identifies that the station enters the PS mode after switching to the primary channel.

Optionally, in an embodiment of the present disclosure, the method further includes:
sending, on the primary channel and via an EDCA mechanism, a data frame to the access point, and/or sending, on the primary channel, a PS mode acknowledgement message frame to the access point, wherein a duration during which the station communicates on the secondary channel exceeds a duration set by a NAV of the primary channel.

The communication method involved in the embodiments of the present disclosure may include at least one of the above steps and the embodiments. For example, step 401 may be implemented as an independent embodiment, step 404 may be implemented as an independent embodiment, and step 406 may be implemented as an independent embodiment, however the present disclosure is not limited thereto.

In some embodiments, reference may be made to other optional implementations described before or after the description corresponding to FIG. 4.

An embodiment of the present disclosure further provides a device for implementing any of the above methods. For example, a device is provided, which includes units or modules for implementing each step executed by the terminal in any of the above methods. For another example, another device is provided, which includes units or modules for implementing each step executed by the network device (e.g., access network device, core network function node, core network device, etc.) in any of the above methods.

It should be understood that the division of each unit or module within the above device represents a logical functional partitioning. In practical implementation, these units or modules may be all or partially integrated into a single physical entity, or physically separated. Furthermore, the unit or module within the device may be implemented in a form in which a processor invokes software. For example, the device may include a processor connected to a memory having instructions stored thereon. The processor invokes the instructions stored in the memory to implement any of the above methods or the function of each unit or module within the above device. The processor may be a general-purpose processor, such as a central processing unit (CPU) or microprocessor. The memory may be a memory within or outside the device. Alternatively, the unit or module within the device may be implemented in a form of a hardware circuit, and the function of some or all units or modules may be achieved by designing the hardware circuit. Such hardware circuit may be understood as one or more processors. For example, in an implementation, the hardware circuit may be an application-specific integrated circuit (ASIC), and the function of some or all units or modules may be achieved by designing the component logical relationship within the circuit. For another example, in another implementation, the above hardware circuit may be implemented through a programmable logic device (PLD). Taking a Field Programmable Gate Array (FPGA) as an example, it may include a substantial number of logic gate circuits, and by configuring the connection between these logic gate circuits via a configuration file, the function of some or all of the above units or modules may be achieved. All units or modules of the above device may be implemented entirely in the form in which a processor invokes software, entirely in the form of hardware circuit, or partially in the form in which the processor invokes software with the remaining portion implemented in the form of hardware circuit.

In an embodiment of the present disclosure, the processor is a circuit having a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may implement certain functions through the logical relationship of hardware circuit. The above logical relationship of hardware circuit is fixed or reconfigurable. For example, the processor is a hardware circuit implemented by application-specific integrated circuit (ASIC) or programmable logic device (PLD), such as FPGA. Within a reconfigurable hardware circuit, the processor loads a configuration file to implement hardware circuit configuration, which process may be understood as that the processor loads instructions to implement the function of some or all of the above units or modules. Furthermore, it may be a hardware circuit designed for artificial intelligence, which may be understood as an ASIC, such as Neural Network Processing Unit (NPU), Tensor Processing Unit (TPU), or Deep Learning Processing Unit (DPU).

FIG. 5 is a schematic diagram of a structure of an access point according to an embodiment of the present disclosure. As shown in FIG. 5, the access point 500 may include at least one of a determining module 501 and a sending module 502.

In some embodiments, the determining module 501 is configured to determine a first wireless frame, the first wireless frame is configured to trigger a station to switch to a secondary channel for communication when a primary channel is busy, the first wireless frame includes first identifier information, and the first identifier information identifies bandwidth information of the secondary channel negotiated between the access point and the station. The sending module 502 is configured to send the first wireless frame on the secondary channel.

Optionally, the above determining module 501 is configured to perform at least one of the communication steps (e.g., step 201, step 301, but not limited thereto) executed by the access point 102 in any of the above methods, which is not repeated herein. The above sending module 502 is configured to perform step 202, step 402, which however is not limited thereto.

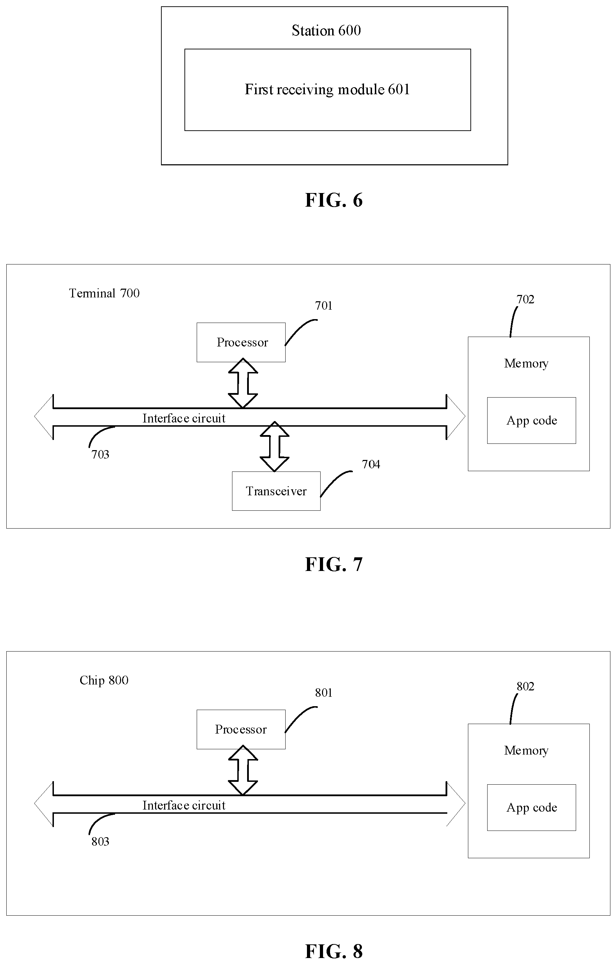

FIG. 6 is a schematic diagram of a structure of a station according to an embodiment of the present disclosure. As shown in FIG. 6, the station 600 may include a first receiving module 601.

In some embodiments, the above first receiving module 601 is configured to receive a first wireless frame on a secondary channel, the first wireless frame is configured to trigger the station to switch to the secondary channel for communication when a primary channel is busy, the first wireless frame includes first identifier information, and the first identifier information identifies bandwidth information of the secondary channel negotiated between the access point and the station.

Optionally, the first receiving module 601 is configured to perform at least one of the communication steps (e.g., step 301, step 401, but not limited thereto) performed by the station 101 in any of the above methods, which is not repeated herein.

FIG. 7 is a schematic structural diagram of a terminal (for example, a user equipment, etc.) 700 according to an embodiment of the present disclosure. The terminal 700 may be a chip, a chip system, a processor or the like supporting a network device to implement any of the above methods, or may be a chip, a chip system, a processor or the like supporting a terminal to implement any of the above methods. The terminal 700 may be configured to implement the method described in the above method embodiments, details of which may refer to the descriptions in the method embodiments.

As shown in FIG. 7, the terminal 700 includes one or more processors 701. The processor 701 may be a general-purpose processor or a dedicated processor, such as a baseband processor or a central processer. The baseband processor may be configured to process communication protocol and communication data, and the central processor may be configured to control a communication device (such as base station, baseband chip, terminal device, terminal device chip, DU or CU, etc.), execute program, and process program data. The terminal 700 is configured to execute any of the above methods.

In some embodiments, the terminal 700 further includes one or more memories 702 for storing instructions. Optionally, all or part of the memories 702 may also be located outside the terminal 700.

In some embodiments, the terminal 700 further includes one or more transceivers 704. Where the terminal 700 includes one or more transceivers 704, the transceiver(s) 704 performs at least one of the communication steps such as sending step and/or receiving step (e.g., steps 202, 203, 204, 205, 206, 207, 302, 305, 307, 401, 404, 406, which however is not limited thereto) in the above methods, and the processor 701 performs at least one of other steps (e.g., steps 201, 301, which however is not limited thereto).

In some embodiments, the transceiver may include a receiver and/or a sender, and the receiver and the sender may be separate or integrated. Optionally, the terms transceiver, transceiver unit, transceiver machine, transceiver circuit, etc. may be used interchangeably; the terms sender, sending unit, sending machine, sending circuit, etc. may be used interchangeably; and the terms receiver, receiving unit, receiving machine, receiver circuit, etc. may be used interchangeably.

In some embodiments, the terminal 700 may include one or more interface circuits 703. Optionally, the interface circuit 703 is connected to the memory 702, and the interface circuit 703 may be configured to receive signals from the memory 702 or other devices, and may be configured to send signals to the memory 702 or other devices. For example, the interface circuit 703 may read instructions stored in the memory 702 and send these instructions to the processor 701.

The terminal 700 described in the above embodiments may be a communication device such as a user equipment, but the scope of the terminal 700 described herein is not limited thereto. The structure of the terminal 700 may not be limited by FIG. 7. The communication device may be a standalone device or part of a large device. For example, the communication device may be: (1) an independent integrated circuit (IC), chip, chip system, or subsystem; (2) an assembly including one or more ICs, optionally including storage components for data and programs; (3) an ASIC, such as a modem; (4) a module embeddable within other devices; (5) a receiver, terminal device, smart terminal device, cellular telephone, wireless device, handheld device, mobile unit, in-vehicle device, network device, cloud device, artificial intelligence device, etc.; (6) other devices, etc.

FIG. 8 is a structural diagram of a chip 800 according to an embodiment of the present disclosure. Where the terminal 700 may be a chip or chip system, reference may be made to the schematic diagram of chip 800 shown in FIG. 8, which however is not limited thereto.

The chip 800 includes one or more processors 801, and is configured to execute any of the above methods.

In some embodiments, the chip 800 further includes one or more 803. Optionally, the interface circuit 803 is connected to a memory 802. The interface circuit 803 may be configured to receive signals from the memory 802 or other devices, and may be configured to send signals to the memory 802 or other devices. For example, the interface circuit 803 may read instructions stored in the memory 802 and send these instructions to the processor 801.

In some embodiments, the interface circuit 803 performs at least one of the communication steps such as sending step and/or receiving step (e.g., steps 202, 203, 204, 205, 206, 207, 302, 305, 307, 401, 404, 406, which however is not limited thereto) in the above methods, and the processor 801 performs at least one of other steps (e.g., steps 201, 301, which however is not limited thereto).

In some embodiments, the terms such as interface circuit, interface, transceiver pin, transceiver, etc., may be used interchangeably.

In some embodiments, the chip 800 further includes one or more memories 802 for storing instructions. Optionally, all or part of the memories 802 may reside outside the chip 800.

The present disclosure further provides a storage medium having instructions stored thereon. The above instructions, when executed on the terminal 700, cause the terminal 700 to perform any one of the above methods. Optionally, the storage medium is an electronic storage medium. Optionally, the storage medium is a computer-readable storage medium, which however is not limited thereto; and it may also be a storage medium readable by other devices. Optionally, the storage medium may be a non-transitory storage medium, which however is not limited thereto and may also be a transitory storage medium.

The present disclosure further provides a program product which, when executed by the terminal 700, causes the terminal 700 to perform any one of the above methods. Optionally, the program product is a computer program product.

The present disclosure further provides a computer program which, when executed on a computer, causes the computer to perform any one of the above methods.

## Claims

1. A communication method, comprising:
determining, by an access point, a first wireless frame, wherein the first wireless frame is configured to trigger a station to switch to a secondary channel for communication when a primary channel is busy, the first wireless frame comprises first identifier information, and the first identifier information identifies bandwidth information of the secondary channel negotiated between the access point and the station; and
sending the first wireless frame on the secondary channel.

2. The communication method according to claim 1, wherein the first identifier information is carried in a common info field of the first wireless frame, and
the bandwidth information comprises one or more bandwidth values.

3. The communication method according to claim 1 or 2, wherein the first wireless frame comprises second identifier information, and the second identifier information identifies that a type of the first wireless frame is an establishment frame configured to trigger a switch to the secondary channel for communication.

4. The communication method according to claim 3, wherein the second identifier information is carried in a user info field of the first wireless frame, and
the user info field further comprises parameter information of the secondary channel.

5. The communication method according to claim 4, wherein the parameter information comprises at least one of:
channel identifier information, spatial stream information, association identifier, AID, information of the station, or modulation and coding scheme, MCS, information.

6. The communication method according to claim 1, wherein the first wireless frame comprises a multi-user request to send, MU-RTS, frame or a buffer status report poll, BSRP, frame.

7. The communication method according to claim 1, further comprising:
receiving a second wireless frame sent by the station,
wherein the second wireless frame identifies that the station communicates on the secondary channel, and
the second wireless frame comprises a clear to send, CTS, frame and/or a quality of service, QoS, null frame, wherein the QoS null frame carries a buffer status report, BSR, field.

8. The communication method according to claim 1, further comprising:
receiving a third wireless frame sent by the station,
wherein the third wireless frame identifies that the station has completed the communication on the secondary channel, and
wherein the third wireless frame comprises a power saving (PS) field, the station and the access point pre-negotiate a PS mode, and the PS field identifies that the station enters the PS mode after switching to the primary channel.

9. The communication method according to claim 1, further comprising:
receiving, on the primary channel, a data frame sent by the station via an enhanced distributed channel access, EDCA, mechanism, and/or a PS mode acknowledgement message frame sent by the station, wherein a duration during which the station communicates on the secondary channel exceeds a duration set by a network allocation vector, NAV, of the primary channel.

10. A communication method, comprising:
receiving, by a station, a first wireless frame on a secondary channel,
wherein the first wireless frame is configured to trigger the station to switch to the secondary channel for communication when a primary channel is busy, the first wireless frame comprises first identifier information, wherein the first identifier information identifies bandwidth information of the secondary channel negotiated between an access point and the station.

11. The communication method according to claim 10, wherein the first identifier information is carried in a common info field of the first wireless frame, and
the bandwidth information comprises one or more bandwidth values.

12. The communication method according to claim 10 or 11, wherein the first wireless frame comprises second identifier information, and the second identifier information identifies that a type of the first wireless frame is an establishment frame configured to trigger a switch to the secondary channel for communication.

13. The communication method according to claim 12, wherein the second identifier information is carried in a user info field of the first wireless frame, and
the user info field further comprises parameter information of the secondary channel.

14. The communication method according to claim 13, wherein the parameter information comprises at least one of:
channel identifier information, spatial stream information, AID information of the station, or MCS information.

15. The communication method according to claim 10, wherein the first wireless frame comprises an MU-RTS frame or a BSRP frame.

16. The communication method according to claim 10, further comprising:
sending a second wireless frame to the access point,
wherein the second wireless frame identifies that the station communicates on the secondary channel, and
the second wireless frame comprises a CTS frame and/or a QoS null frame, and the QoS null frame carries a BSR field.

17. The communication method according to claim 10, further comprising:
sending a third wireless frame to the access point,
wherein the third wireless frame identifies that the station has completed the communication on the secondary channel, and
the third wireless frame comprises a PS field, the station and the access point pre-negotiate a PS mode, and the PS field identifies that the station enters the PS mode after switching to the primary channel.

18. The communication method according to claim 10, further comprising:
sending, on the primary channel and via an EDCA mechanism, a data frame to the access point, and/or sending, on the primary channel, a PS mode acknowledgement message frame to the access point,
wherein a duration during which the station communicates on the secondary channel exceeds a duration set by a NAV of the primary channel.

19. An access point, comprising:
a determining module, configured to determine a first wireless frame, wherein the first wireless frame is configured to trigger a station to switch to a secondary channel for communication when a primary channel is busy, the first wireless frame comprises first identifier information, and the first identifier information identifies bandwidth information of the secondary channel negotiated between the access point and the station; and
a sending module, configured to send the first wireless frame on the secondary channel.

20. A station, comprising:
a first receiving module, configured to receive a first wireless frame on a secondary channel, wherein the first wireless frame is configured to trigger the station to switch to the secondary channel for communication when a primary channel is busy, the first wireless frame comprises first identifier information, and the first identifier information identifies bandwidth information of the secondary channel negotiated between the access point and the station.

21. A communication device, comprising:
one or more processors,
wherein the communication device is configured to execute the communication method according to any one of claims 1 to 9 or 10 to 18.

22. A storage medium having instructions stored thereon that, when being executed on a communication device, cause the communication device to perform the communication method according to any one of claims 1 to 9, or to perform the communication method according to any one of claims 10 to 18.
